# EUROPÄISCHE PATENTANMELDUNG

(11) **EP 4 538 457 A1**
(43) Veröffentlichungstag der Anmeldung: **16.04.2025**
(21) Anmeldenummer: 24203963.4
(22) Anmeldetag: 01.10.2024
(51) Int. Cl.: E01B 26/00, B61L 29/02, E01B 17/00, E04H 17/14, E04H 17/24, F16B 7/04

(54) **ZAUNSTANGE FÜR EINE AUS MEHREREN SOLCHER ZAUNSTANGEN GEBILDETE ZAUNSTREBE EINES GLEISSCHUTZZAUNS, ZAUNSTREBE FÜR EINEN GLEISSCHUTZZAUN UND GLEISSCHUTZZAUNSYSTEM**

(30) Priorität: 13.10.2023 DE 102023128112
(71) Anmelder: ARC Allround Cleaning Rheinfelden AG, 4310 Rheinfelden (CH)
(72) Erfinder: Götz, Alexander, 93049 Regensburg (DE)
(74) Vertreter: Charrier Rapp & Liebau

(57) **Zusammenfassung**

Zaunstange (9) für eine aus mehreren solcher Zaunstangen (9) gebildete Zaunstrebe (7) eines Gleisschutzzauns, wobei die Zaunstange (9) ein Zaunrohr (12) umfasst. Die Aufgabe, eine Zaunstange (9) für eine aus mehreren Zaunstangen (9) gebildete Zaunstrebe (7) eines Gleisschutzzauns (1) bereitzustellen, die ein einfaches Zusammenbauen und Lösen der Zaunstangen (9), insbesondere auch von mittig verbauten Zaunstangen (9), ermöglicht, löst die Anmeldung durch einen Stangenverbinder (13), der zwischen einer ausgefahrenen Kupplungsstellung zur Verbindung mit einer benachbarten Zaunstange (9) und einer in das Zaunrohr (12) eingefahrenen Lösestellung zum Lösen benachbarter Zaunstangen (9) einer Zaunstrebe (7) verschiebbar an einem ersten Ende des Zaunrohrs (12) angeordnet ist. Weiter ist eine aus mehreren Zaunstangen (9) gebildete Zaunstrebe (9) sowie ein zumindest eine Zaunstrebe (7) aufweisendes Gleisschutzzaunsystem (1) Gegenstand der Anmeldung.

## Beschreibung

Die Erfindung betrifft eine Zaunstange für eine aus mehreren solcher Zaunstangen gebildete Zaunstrebe eines Gleisschutzzauns nach dem Oberbegriff des Anspruchs 1, eine Zaunstrebe für einen Gleisschutzzaun nach Anspruch 13 und ein Gleisschutzzaunsystem nach Anspruch 15.

Zur Absicherung von (temporären) Gleisbaustellen werden im Eisenbahnverkehr Gleisschutzzäune bzw. Gleiskörperschutzzäune eingesetzt, durch die ein ungewolltes Eindringen in einen Gleisbereich, beispielsweise ein Eindringen in den Bereich eines weiterhin befahrenen Gleises, verhindert werden soll.

Aus EP 3 936 663 A1 ist ein Gleisschutzzaunsystem umfassend einen zumindest eine Zaunstrebe aufweisenden Gleisschutzzaun bekannt. Der Gleisschutzzaun ist dabei über Gleisschutzzaunhaltesysteme an einem Gleissystem, speziell an einer Schiene des Gleissystems, angebracht. Das Gleisschutzzaunhaltesystem umfasst dabei eine Zaunhalterung zur Halterung der zumindest einen Zaunstrebe, ein an einem Gleissystem befestigbares Befestigungselement sowie ein Fixierungssystem zur Fixierung der Zaunhalterung an dem Befestigungselement. Die den Gleisschutzzaun bildenden Zaunstreben sind dabei jeweils durch mehrere Holme gebildet, wobei benachbarte Holme jeweils durch einen Holmverbinder, der in die einander zugewandten Enden der Holme eingesteckt wird, miteinander verbunden sind.

Zum Verbinden der Zaunstangen von derartigen aus dem Stand der Technik bekannten durchgängigen Zaunstreben werden die Holme bzw. Zaunstangen üblicherweise der Reihe nach durch Einstecken eines Holmverbinders in den vorangehenden Holm und Aufstecken des nachfolgenden Holms auf den Holmverbinder miteinander verbunden. Entsprechend hierzu erfolgt üblicherweise ein Trennen der Holme schrittweise. Ein Verbinden und Lösen mittig innerhalb einer Zaunstrebe angeordneter Holme, beispielsweise um an einer Stelle des Gleiszauns kurzzeitig einen Zugang zu einem sicherheitskritischen Bereich zu schaffen, ist dabei problematisch und aufwendig. Dies gilt insbesondere, da benachbarte Holme einem Verschieben der zu trennenden Holme in axialer Richtung, d.h. entlang der Längsachse der Zaunstrebe, entgegenstehen.

Ausgehend hiervon besteht die Aufgabe, eine Zaunstange für eine aus mehreren solcher Zaunstangen gebildete Zaunstrebe eines Gleisschutzzauns bereitzustellen, die ein einfaches Zusammenbauen und Lösen der Zaunstangen, insbesondere auch von mittig verbauten Zaunstangen, ermöglicht. Weiter soll eine aus mehreren Zaunstangen gebildete Zaunstrebe sowie ein zumindest eine Zaunstrebe aufweisendes Gleisschutzzaunsystem bereitgestellt werden.

Gelöst wird diese Aufgabe mit einer Zaunstange nach Anspruch 1, einer Zaunstrebe nach Anspruch 13 sowie einem Gleisschutzzaunsystem nach Anspruch 15. Vorteilhafte Ausgestaltungen und zweckmäßige Weiterbildungen der Erfindung sind den Unteransprüchen entnehmbar.

Die erfindungsgemäße Zaunstange für eine aus mehreren solcher Zaunstangen gebildete Zaunstrebe eines Gleisschutzzauns umfasst ein Zaunrohr (bzw. Zaunstangenrohr) sowie einen Stangenverbinder, wobei der Stangenverbinder zwischen einer ausgefahrenen Kupplungsstellung zur Verbindung mit einer benachbarten Zaunstange und einer in das Zaunrohr eingefahrenen Lösestellung zum Lösen benachbarter Zaunstangen einer Zaunstrebe verschiebbar an einem ersten Ende des Zaunrohrs angeordnet ist. Bei den (länglich ausgebildeten) Zaunrohren handelt es sich vorzugsweise um Rohre mit im Wesentlichen rundem oder rechteckigen, insbesondere quadratischem, Querschnitt. Der Stangenverbinder ist dabei innenliegend an dem ersten Ende des Zaunrohrs geführt. Das Verschieben des Stangenverbinders erfolgt dabei axial, d.h. parallel zur Längsachse des Zaunrohrs bzw. der Zaunstange. Zum Verbinden mit einer benachbarten Zaunstange wird der Stangenverbinder in der Kupplungsstellung in ein zur Aufnahme des Stangenverbinders geeignet ausgestaltetes Ende der benachbarten Zaunstange eingebracht. Durch die erfindungsgemäße Ausgestaltung ist ein Verbinden und Lösen der Zaunstangen ohne axiale Verschiebung der zu verbindenden bzw. zu trennenden Zaunstangen möglich. Speziell wird zum Lösen zweier miteinander verbundener Zaunstangen der die Zaunstangen verbindende Stangenverbinder in die eingefahrene Lösestellung verschoben. Hierdurch können die Zaunstangen auseinandergebracht, insbesondere transversal zur Längsachse der Zaunstrebe gegeneinander verschoben, werden. Das Lösen dieser nun voneinander getrennten Zaunstangen von dem jeweils noch mit dem über das andere Ende der Zaunstange verbundenen Rest der Zaunstrebe, d.h. von einer mit dem jeweils anderen Ende der Zaunstangen über einen Stangenverbinder verbundenen weiteren Zaunstange, kann entweder analog zu dem oben beschriebenen Einfahren des Stangenverbinders in die Lösestellung erfolgen. Durch die bereits erfolgte Trennung der Zaunstangen ist ein Lösen der Zaunstangen von dem Rest der Zaunstrebe jedoch auch durch ein axiales Bewegen dieser Zaunstangen entlang der Längsachse der Zaunstrebe möglich. Das Verbinden von benachbarten Zaunstangen, speziell von innenliegend innerhalb einer zusammengebauten Zaunstrebe zu verbindenden Zaunstangen, kann durch entsprechendes Verschieben des Stangenverbinders von der Lösestellung in die Kupplungsstellung und Einbringen des Stangenverbinders in die benachbarte Zaunstange erfolgen. Durch die erfindungsgemäße Ausgestaltung ist ein Lösen und Verbinden benachbarter Zaunstangen, insbesondere auch innenliegend in einer Zaunstrebe angeordneter Zaunstangen, auf einfache und zügige Weise möglich.

In einer vorteilhaften Ausgestaltung weist das Zaunrohr an einem zweiten Ende einen Verbindungsabschnitt, insbesondere einen gegenüber dem Rest des Zaunrohrs verjüngten Verbindungsabschnitt, d.h. in seiner Abmessung bzw. seinem Durchmesser reduzierten Verbindungsabschnitt, oder alternativ hierzu einen verbreiterten Verbindungsabschnitt, zur Verbindung mit dem Stangenverbinder einer benachbarten gleichartigen Zaunstange auf. Bevorzugt ist der Verbindungsabschnitt dabei zum Einbringen des Stangenverbinders einer benachbarten Zaunstange, insbesondere zur formschlüssigen Aufnahme des Stangenverbinders, ausgebildet. Durch die Ausgestaltung der Zaunstange mit dem Stangenverbinder an dem ersten Ende und dem Verbindungsabschnitt an dem zweiten Ende des Zaunrohrs können mehrere dieser Zaunstangen zur Bildung einer Zaunstrebe miteinander verbunden werden. Vorzugsweise weisen der Stangenverbinder und der Verbindungsabschnitt dabei jeweils zumindest eine Aufnahmeöffnung auf, insbesondere eine durch den Stangenverbinder bzw. den Verbindungsabschnitt durchgehende Aufnahmeöffnung. Bei einer Verbindung zweier gleichartiger Zaunstangen, d.h. bei einem Einbringen des Stangenverbinders einer ersten Zaunstange in den Verbindungsabschnitt einer zweiten Zaunstange, sind diese Aufnahmeöffnungen vorzugsweise konzentrisch bzw. übereinanderliegend angeordnet. Zur sicheren Verbindung des Stangenverbinders und des Verbindungsabschnitts ist in die übereinanderliegend angeordneten Aufnahmeöffnungen ein Sicherungselement, beispielsweise ein Sicherungsstift, einbringbar. Hierdurch wird eine sichere Verbindung benachbarter Zaunstangen gewährleistet, wobei insbesondere eine ungewollte laterale Bewegung bzw. ein Auseinanderbewegen und ein hierdurch bewirktes Lösen benachbarter Zaunstangen zuverlässig verhindert wird. In einer besonders vorteilhaften Ausgestaltung weist der Stangenverbinder einen Eingriffsabschnitt auf, der vorzugsweise eine gegenüber dem restlichen Stangenverbinder verringerte Abmessung, speziell einen geringeren (Außen-) Durchmesser, aufweist. In der Kupplungsstellung greift der Eingriffsabschnitt dabei in den Verbindungsabschnitt einer benachbarten Zaunstange ein. Der Übergang des Eingriffsabschnitts zu dem restlichen Stangenverbinder wird vorzugsweise durch einen Absatz gebildet. Bei einer Verbindung zweier Zaunstangen steht die Außenkante des Verbindungsabschnitts hierbei vorzugsweise an dem Absatz an. Über das Anstehen des Absatzes an der Außenkante wird die Eindringtiefe des Stangenverbinders begrenzt. Weiter kann durch die genannte Ausgestaltung auch sichergestellt werden, dass Aufnahmeöffnungen am Eingriffsbereich des Stangenverbinders und Aufnahmeöffnungen des Verbindungsabschnitts zum Einbringen eines Sicherungselements in entsprechend übereinander angeordneter Position zum Liegen kommen.

In einer weiteren vorteilhaften Ausgestaltung ist der Stangenverbinder in der Kupplungsstellung oder der Lösestellung federnd vorgespannt. Die federnde Vorspannung des Stangenverbinders in einer der genannten Positionen ist insbesondere für das Verbinden und/oder Lösen benachbarter Zaunstangen vorteilhaft. Vorzugsweise ist der Stangenverbinder in der die Grundstellung darstellenden Kupplungsstellung vorgespannt, so dass der Stangenverbinder bereits durch die federnde Vorspannung in der die Verbindung zweier benachbarter Zaunstangen bewirkenden Kopplungsstellung gehalten wird. In einer besonders vorteilhaften Ausgestaltung ist in dem Zaunrohr ein Begrenzungselement und zwischen dem Begrenzungselement und dem Stangenverbinder ein Federelement angeordnet. Das Begrenzungselement kann dabei insbesondere ein in die Zaunstange eingebrachter Begrenzungsstift sein. Durch die genannte Ausgestaltung ist eine besonders einfach herzustellende und robuste Ausgestaltung eines federnd in der Zaunstange vorgespannten Stangenverbinders gegeben.

Vorzugsweise ist der Stangenverbinder in der Lösestellung vollständig oder zumindest nahezu vollständig in das Zaunrohr eingebracht. Das Lösen bzw. Verbinden zweier Zaunstangen wird hierbei durch den in der Lösestellung angeordneten Stangenverbinder nicht behindert.

In einer bevorzugten Ausgestaltung ist ein mit dem Stangenverbinder verbundenes Betätigungselement zur insbesondere manuellen Verschiebung des Stangenverbinders von der Kupplungsstellung in die Lösestellung und/oder von der Lösestellung in die Kupplungsstellung vorgesehen. Das Verschieben des Stangenverbinders kann dabei vorzugsweise unmittelbar über das Betätigungselement erfolgen. Ein weiteres, insbesondere spezielles Werkzeug ist hierfür nicht erforderlich. Über das Betätigungselement ist ein einfaches Verbringen des Stangenverbinders von der Kupplungsstellung in die Lösestellung bzw. umgekehrt durch einen Benutzer möglich. Besonders bevorzugt ist das Betätigungselement dabei in einem Führungsschlitz des Zaunrohrs geführt. Das Betätigungselement ist dabei insbesondere von dem innenliegend in dem Zaunrohr verschiebbar angeordneten Stangenverbinder durch den Führungsschlitz hindurch nach außen geführt. Der Führungsschlitz ist dabei vorzugsweise als ein sich entlang der Längsachse des Zaunrohrs bzw. der Zaunstange erstreckendes Langloch ausgestaltet. Durch den Führungsschlitz, speziell ein Anliegen des Betätigungselements an den Enden des Führungsschlitzes, kann dabei der Verschiebeweg des Betätigungselements und somit ein Verschieben des Stangenverbinders begrenzt werden. Speziell kann dabei ein Verschieben des Stangenverbinders über die Kupplungsstellung und/oder die Lösestellung hinaus verhindert werden.

Bei dem Stangenverbinder kann es sich beispielsweise um einen im Wesentlichen zylinderförmigen Vollkörper handeln. Um Ladungsverschleppung über große Strecken entlang des abgesperrten Bereiches bzw. entlang der Zaunstrebe zu verhindern, ist der Stangenverbinder vorzugsweise elektrisch isolierend ausgebildet, beispielsweise aus einem Kunststoff geformt.

Gegenstand der Erfindung ist weiter eine Zaunstrebe für einen Gleisschutzzaun umfassend mehrere oben beschriebene, insbesondere gleichartige, Zaunstangen, die miteinander verbindbar bzw. verbunden sind. Insbesondere sind zwei benachbarte Zaunstangen dabei über den Zaunstangenverbinder verbunden. Ein Zaunstangenverbinder einer ersten Zaunstange greift dabei insbesondere in den Verbindungsabschnitt einer zweiten Zaunstange ein. Vorzugsweise sind die miteinander verbundenen Zaunstangen durch ein in die Aufnahmeöffnung des Stangenverbinders der ersten Zaunstange und die Aufnahmeöffnung des Verbindungsabschnitts der zweiten Zaunstange einbringbares Sicherungselement gesichert.

Zudem ist ein Gleisschutzzaunsystem umfassend eine oben beschriebene Zaunstrebe sowie ein an einer Schiene anbringbares Gleisschutzzaunhaltesystem mit zumindest einer Zaunhalterung, die mindestens eine, bevorzugt mehrere Aufhängungen aufweist, in die die Zaunstrebe einlegbar und sicherbar ist, Gegenstand der Erfindung. Die Aufhängungen weisen dabei vorzugsweise eine an die Außenkontur der Zaunstangen angepasste Stangenaufnahme auf, in die die Zaunstrebe, bzw. die zur Ausbildung der Zaunstrebe miteinander verbundenen Zaunstangen, von oben eingelegt und anschließend durch eine die Entnahme aus der Stangenaufnahme verhindernde, speziell eine die Öffnung der Stangenaufnahme begrenzende, Sicherungseinheit gesichert werden können. Vorzugsweise werden die Zaunstreben dabei klemmend in den Stangenaufnahmen fixiert. Durch die Klemmung der Zaunstangen der Zaunstrebe an den Zaunhalterungen und die Verbindung mehrerer Zaunstangen erfolgt eine Versteifung des Gleisschutzzauns bzw. des Gleisschutzzaunsystems. Die Versteifung verleiht dem Gleisschutzzaunsystem große Stabilität über deren Verlauf parallel zur Schiene hinweg.

Gegenstand der Offenbarung ist zudem eine Zaunstange für eine aus mehreren solcher Zaunstangen gebildete Zaunstrebe eines Gleisschutzzauns, wobei die Zaunstange einen Stangenverbinder, der zwischen einer ausgefahrenen Kupplungsstellung zur Verbindung mit einer benachbarten Zaunstange und einer in die Zaunstange eingefahrenen Lösestellung zum Lösen benachbarter Zaunstangen einer Zaunstrebe verschiebbar an einem ersten Ende der Zaunstange angeordnet ist. Der Stangenverbinder ist insbesondere parallel zu einer Längsachse des Stangenverbinders zwischen der Kupplungsstellung und der Lösestellung verschiebbar. Vorzugsweise weist die Zaunstange an einem zweiten Ende einen Verbindungsabschnitt, insbesondere einen Verbindungsabschnitt mit verringerter oder verbreiterter Abmessung, zur Verbindung mit dem Stangenverbinder einer benachbarten gleichartigen Zaunstange auf, wobei der Verbindungsabschnitt insbesondere zum Einbringen des Stangenverbinders einer benachbarten Zaunstange ausgebildet ist. Bezüglich der möglichen bevorzugten Ausgestaltungen, speziell auch betreffend die Aufnahmeöffnungen des Stangenverbinders sowie des Verbindungsabschnitts zur Einbringung eines Sicherungselements oder die Ausgestaltung des Stangenverbinders mit dem Eingriffsabschnitt oder dessen federnde Vorspannung in der Kupplungsstellung oder die Ausgestaltung des Stangenverbinders als elektrisch isolierender Stangenverbinder gelten für die hier genannte Zaunstange obige Ausführungen entsprechend. Weiter kann die genannte Zaunstange ein Begrenzungselement, insbesondere einen in die Zaunstange eingebrachten Begrenzungsstift, und ein zwischen dem Begrenzungselement und dem Stangenverbinder angeordnetes Federelement aufweisen. Vorzugsweise ist der Stangenverbinder der genannten Zaunstange in der Lösestellung vollständig in die Zaunstange eingebracht. In einer vorteilhaften Ausgestaltung weist die genannte Zaunstange einen oben beschriebenen Führungsschlitz zur Führung eines mit dem Stangenverbinder verbundenen Betätigungselements zur Verschiebung des Stangenverbinders auf. Diesbezüglich sowie auch im Übrigen gelten obige Ausführungen für die genannte Zaunstange in entsprechender Weise. Weiter ist eine Zaunstrebe mit mehreren derartigen miteinander verbindbaren bzw. verbundenen Zaunstangen sowie ein Gleisschutzzaunsystem umfassend eine derartige Zaunstrebe sowie das oben genannte Gleisschutzzaunhaltesystem Gegenstand der Offenbarung.

Diese und weitere Merkmale sowie Vorteile und Wirkungen der erfindungsgemäßen Zaunstange sowie der aus diesen gebildeten Zaunstrebe für ein Gleisschutzzaunsystem ergeben sich aus den nachfolgenden unter Bezugnahme auf die begleitenden Zeichnungen näher beschriebenen Ausführungsbeispielen. Die Zeichnungen zeigen:
- **Fig.** 1: ein Gleisschutzzaunsystem umfassend einen aus mehreren Zaunstreben gebildeten Gleisschutzzaun sowie ein an einer Schiene angebrachtes Gleisschutzzaunhaltesystem;
- Fig. 2: eine Seitenansicht eines Gleisschutzzaunhaltesystems aus Fig. 1;
- Fig. 3: eine Detailansicht einer Aufhängung einer Zaunhalterung des Gleisschutzzaunsystems aus Fig. 2;
- Fig. 4: ein Ausschnitt einer Zaunstange der Zaunstreben des Gleisschutzzauns aus Fig. 1 in einer Seitenansicht;
- Fig. 5: ein Ausschnitt einer Zaunstange der Zaunstreben des Gleisschutzzauns aus Fig. 1 in einer geschnittenen Seitenansicht;
- Fig. 6: eine vergrößerte Darstellung der Zaunstange aus Fig. 5 mit in der Kupplungsstellung angeordnetem Stangenverbinder;
- Fig. 7: eine vergrößerte Darstellung der Zaunstange aus Fig. 5 mit in der Lösestellung angeordnetem Stangenverbinder;
- Fig. 8: eine geschnittene Seitenansicht zweier benachbarter Zaunstangen einer Zaunstrebe in nicht verbundenem, gelöstem Zustand;
- Fig. 9: eine geschnittene Seitenansicht zweier benachbarter Zaunstangen einer Zaunstrebe in verbundenem, nicht gesichertem Zustand;
- Fig. 10: eine geschnittene Seitenansicht zweier benachbarter Zaunstangen einer Zaunstrebe in verbundenem, gesichertem Zustand.

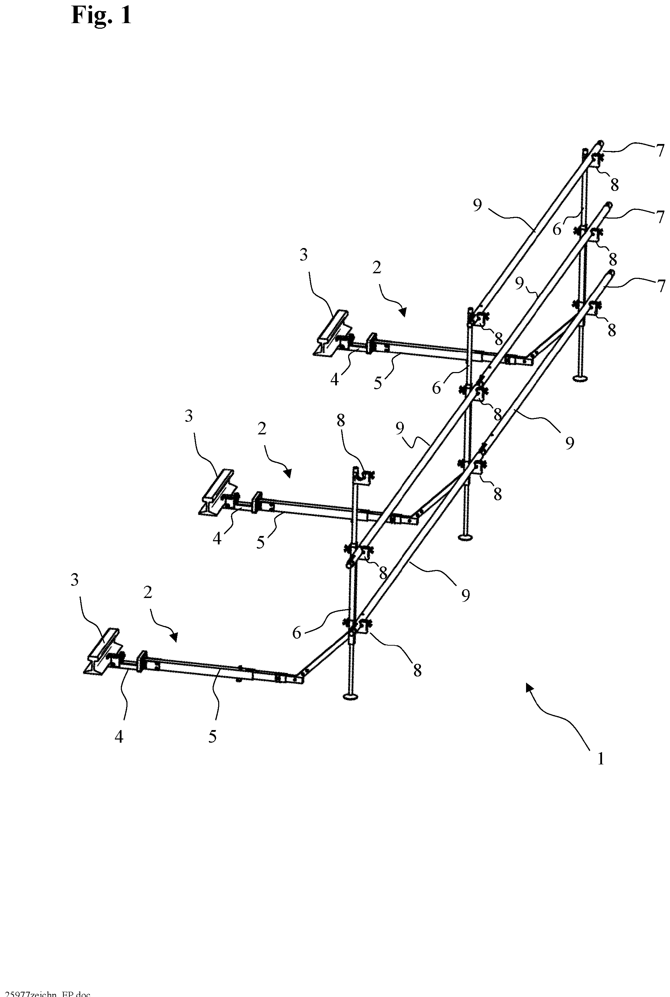

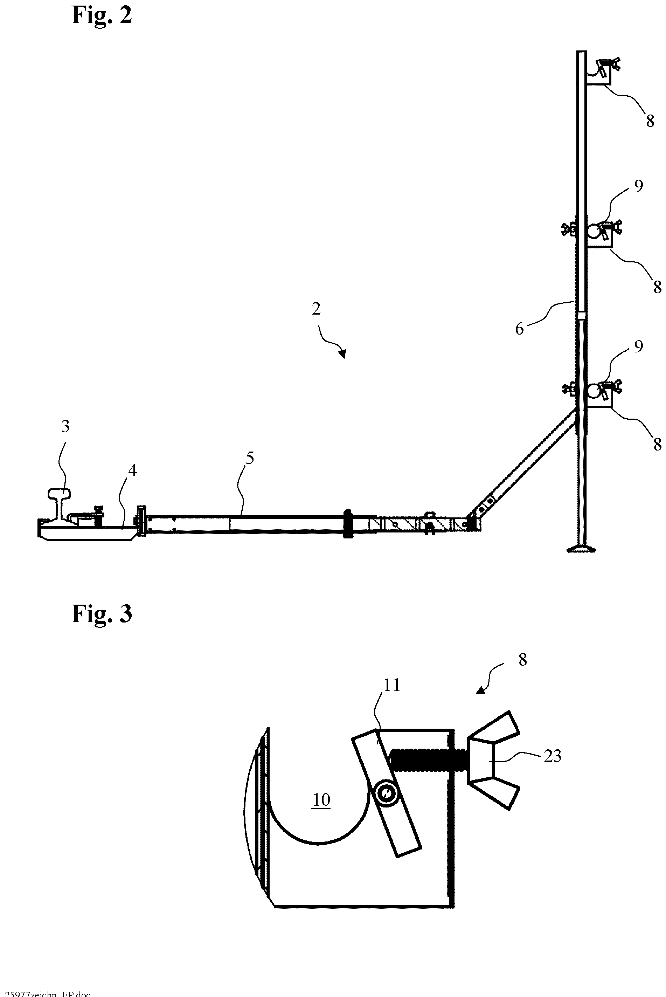

Fig. 1 zeigt eine perspektivische Darstellung eines Gleisschutzzaunsystems 1 umfassend mehrere Gleisschutzzaunhaltesysteme 2 über den ein Gleisschutzzaun an einer Schiene 3, die hier in Form von kurzen Schienenabschnitten skizziert ist, angebracht ist. Das auch in Fig. 2 gezeigte Gleisschutzzaunhaltesystem 2 weist dabei eine an der Schiene 3 angebrachte Schienenfußhalterung 4, eine mit der Schienenfußhalterung 4 angebrachte horizontale Strebenanordnung 5 und eine mit der horizontalen Strebenanordnung 5 verbundene Zaunhalterung 6 auf.

Der in Fig. 1 beispielhafte gezeigte Gleisschutzzaun wird durch drei übereinander angeordnete Zaunstreben 7 gebildet, die durch entsprechend übereinander angeordnete Aufhängungen 8 der Zaunhalterungen 6 gehalten werden. Die beispielhaft gezeigten Zaunhalterungen 6 sind dabei, wie insbesondere auch in Fig. 2 gezeigt ist, jeweils aus mehreren Vertikalstreben zusammengesetzt, die ineinander eingesteckt und geführt sowie durch Fixiermittel, hier unter Einsatz von Flügelschrauben, in Ihrer Position relativ zueinander festlegbar sind. Die Befestigung der Aufhängungen 8 an den Vertikalstreben der Zaunhalterung 6 kann beispielsweise durch Verschweißen oder Verschrauben erfolgen. Die in den Aufhängungen 8 anordenbaren Zaunstreben 7 sind dabei jeweils aus miteinander verbundenen und unten im Detail beschriebenen Zaunstangen 9 zusammengesetzt. Lediglich zu Anschauungszwecken ist die oberste Zaunstrebe 7 in Fig. 1 unvollständig bzw. mit nur einer Zaunstange 9 dargestellt. Entsprechend hierzu ist in Fig. 2 die oberste Aufhängung 8 der Zaunhalterung 6 ohne in eine diese eingebrachte Zaunstange 9 abgebildet. In dem vorliegenden Ausführungsbeispiel weisen die Zaunstangen 9 einen runden Querschnitt auf, wobei grundsätzlich auch andere Ausgestaltungen möglich sind.

Fig. 3 zeigt eine Aufhängung 8 der Zaunhalterung 6 aus Fig. 1 und Fig. 2 in vergrößerter Darstellung. Die Aufhängung 8 umfasst dabei eine an die Außenkontur der Zaunstange 9 angepasste, nach oben offene Stangenaufnahme 10, einen drehbar gelagerten Klemmstein 11 sowie eine in einer mit einem Gewinde versehenen Aufnahme angeordnete Flügelmutter 23. Die Fixierung einer in die Stangenaufnahme 10 von oben eingelegten Zaunstange 9 erfolgt dabei durch Einschrauben der Flügelmutter 23 in Richtung der Stangenaufnahme 10. Speziell drückt das vordere Ende der Flügelmutter 23 hierbei gegen den Klemmstein 11, so dass dieser zur Anlage an die in die Stangenaufnahme 10 eingebrachte Zaunstange 9 kommt und diese in der Stangenaufnahme 10 klemmt.

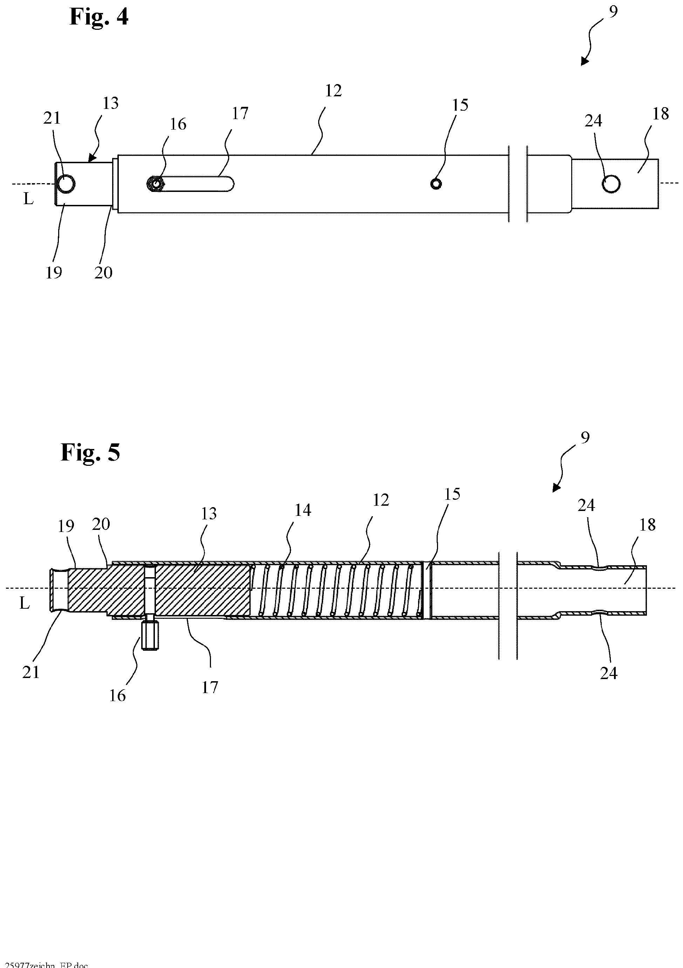

Die beiden Endbereiche einer Zaunstange 9 der Zaunstrebe 7 aus Fig. 1 sind in Fig. 4 und in Fig. 5 in einer Seitenansicht abgebildet, wobei Fig. 5 eine gegenüber Fig. 4 um 90° gedrehte Schnittdarstellung zeigt. Die Zaunstange 9 umfasst dabei ein Zaunrohr 12, das, wie auch in Form der vertikalen Linien angedeutet wird, eine beliebige, sinnvollerweise jedoch durch einen Benutzer noch handhabbare und die erforderliche Stabilität aufweisende Länge haben kann.

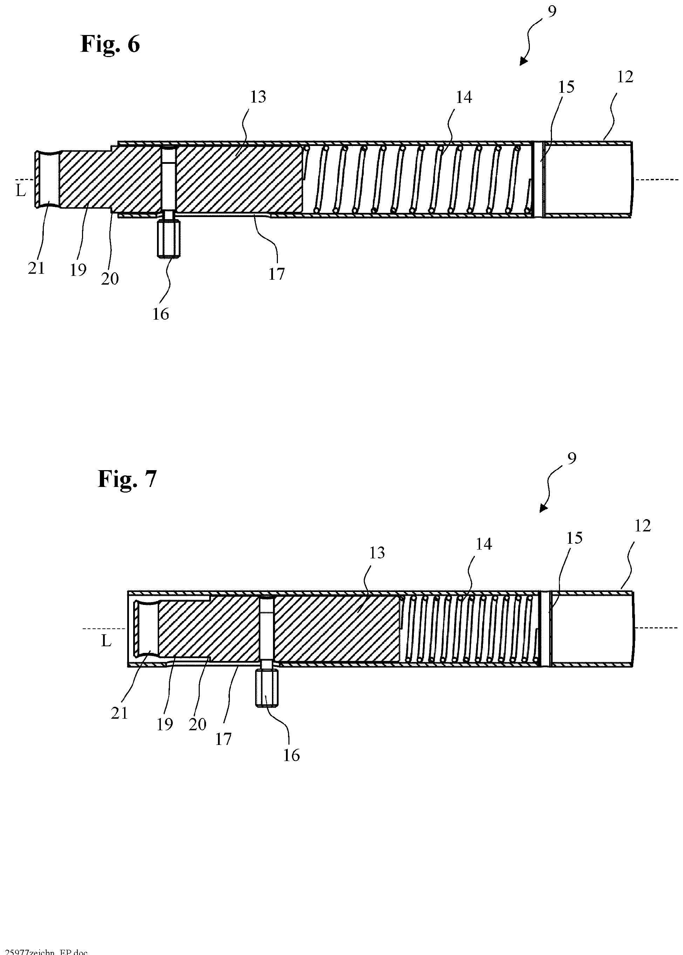

An dem in Fig. 4 und Fig. 5 gezeigten und in Fig. 6 und in Fig. 7 im Detail dargestellten linken Ende der Zaunstange 9 bzw. des Zaunrohrs 12 ist ein insbesondere elektrisch isolierender Stangenverbinder 13 angeordnet. Der Stangenverbinder 13 ist dabei zwischen einer in Fig. 6 gezeigten ausgefahrenen Kupplungsstellung, über den die Zaunstange 9 mit einer benachbarten Zaunstange 9 verbunden werden kann, und einer in Fig. 7 gezeigten Lösestellung, in der der Stangenverbinder 13 vollständig in das Zaunrohr 12 eingebracht ist, entlang bzw. parallel zu einer Längsachse L des Zaunrohrs 12 bzw. der Zaunstange 9 verschiebbar in dem Zaunrohr 12 geführt. In dem vorliegend gezeigten Ausführungsbeispiel ist der Stangenverbinder 13 durch ein in dem Zaunrohr 12 angeordnetes Federelement 14 in der die Grundstellung bildenden Kupplungsstellung vorgespannt. Das Federelement 14 liegt dabei mit einer Seite an dem in dem Zaunrohr 12 liegenden inneren Ende des Stangenverbinders 13 und mit seiner anderen Seite an einem in dem Zaunrohr 12 angeordneten Begrenzungselement 15 an. Das Begrenzungselement 15 des gezeigten Ausführungsbeispiels wird speziell, wie auch in Fig. 4 skizziert ist, durch einen durch die Seitenwand des Zaunrohrs 12 eingebrachten Begrenzungsstift gebildet.

Über ein mit dem Stangenverbinder 13 in Verbindung stehendes Betätigungselement 16 kann der Stangenverbinder 13 von der in Fig. 6 gezeigten Kupplungsstellung gegen die Wirkung des Federelements 14 in die in Fig. 7 gezeigte Lösestellung verbracht werden. Das Betätigungselement 16 des gezeigten Ausführungsbeispiels ist als ein in eine Aufnahme des Stangenverbinders 13 eingebrachter Betätigungsstift ausgestaltet, wobei der Betätigungsstift durch einen sich entlang der Längsachse L der Zaunstange 9 erstreckenden Führungsschlitz 17 des Zaunrohrs 12 nach außen geführt ist. Durch Anliegen des Betätigungselements 16 an den längsseitigen Enden des Führungsschlitzes 17 ist dabei eine Begrenzung des Verschiebewegs des Stangenverbinders 13 gegeben. Speziell stellen die Positionen, in denen das Betätigungselement 16 an den längsseitigen Enden des Führungsschlitzes 17 ansteht, in dem gezeigten Ausführungsbeispiel die Kupplungsstellung bzw. die Lösestellung dar.

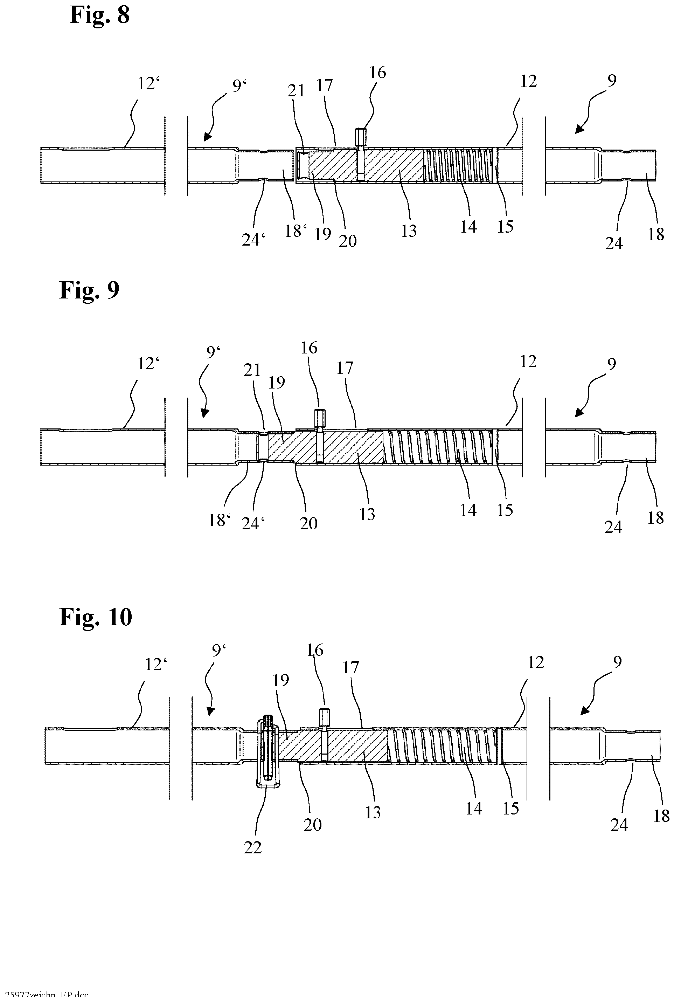

Zum unten in Bezug auf Fig. 8 bis Fig. 10 im Detail beschriebenen Verbinden zweier gleichartiger benachbarter Zaunstangen 9 mit Hilfe des Stangenverbinders 13 weist das Zaunrohr 12 an dem in Fig. 4 und Fig. 5 gezeigten rechten Ende einen Verbindungsabschnitt 18 auf. In dem vorliegenden Ausführungsbeispiel weist der Verbindungsabschnitt 18 einen im Vergleich zum restlichen Zaunrohr 12 verringerten Durchmesser auf. In den Verbindungsabschnitt 18 kann ein in der Kupplungsstellung nach außen vorstehender Eingriffsabschnitt 19 des Stangenverbinders 13 eingebracht werden. Der Eingriffsabschnitt 19 weist vorliegend unter Bildung eines Absatzes 20 einen gegenüber dem restlichen Stangenverbinder 13 verringerten Durchmesser auf, wobei der Außendurchmesser des Eingriffsbereichs 19 im Wesentlichen dem Innendurchmesser des Verbindungsabschnitts 18 entspricht. Der Verbindungsabschnitt 18 und der Eingriffsbereich 19 des Stangenverbinders 13 weisen weiter Aufnahmeöffnungen 21, 24 auf, in die, wie unten in Bezug auf Fig. 10 näher beschrieben ist, ein Sicherungselement 22 zur Sicherung der Verbindung benachbarter Zaunstangen 9 eingebracht werden kann.

In Fig. 8 bis Fig. 10 ist das Verbinden zweier benachbarter Zaunstangen 9, 9`, speziell das Verbinden des Stangenverbinders 13 einer ersten Zaunstange 9 mit einem Verbindungsabschnitt 18` einer zweiten Zaunstange 9`, skizziert. Wie in Fig. 8 gezeigt ist, wird dabei zunächst der Stangenverbinder 13 der ersten Zaunstange 9 über das Betätigungselement 16 in die Lösestellung verbracht und der Verbindungsabschnitt 18` der zweiten Zaunstange 9` und das den Stangenverbinder 13 aufweisende Ende der ersten Zaunstange 9 aneinander angrenzend positioniert. Unter Wirkung des Federelements 14, gegebenenfalls unterstützt durch ein Betätigen des Betätigungselements 16, wird der Stangenverbinder 13, wie in Fig. 9 gezeigt ist, anschließend in die Kupplungsstellung bewegt, wodurch der Eingriffsbereich 19 des Stangenverbinders 13 in den Verbindungsabschnitt 18` der in Fig. 9 gezeigten linken Zaunstange 9` verbracht wird. Bei vollständig in den Verbindungsabschnitt 18` eingebrachtem Eingriffsabschnitt 19 liegt der Absatz 20 dabei an der Außenkante des Verbindungsabschnitts 18` an. Die Aufnahmeöffnung 21 des Eingriffsbereichs 13 und die Aufnahmeöffnung 24` des Verbindungsabschnitts 18` kommen dabei konzentrisch zueinander zum Liegen. Zur Sicherung der Zaunstangen 9, 9` in dem gekoppelten Zustand wird anschließend, wie in Fig. 10 gezeigt ist, ein Sicherungselement 22, vorliegend in Form eines Rohrklappsteckers, in die Aufnahmeöffnungen 21, 24` eingesteckt. Ein Lösen der beiden miteinander verbundenen Zaunstangen 9, 9` erfolgt in entsprechend umgekehrter Art und Weise.

Der Vollständigkeit halber wird darauf hingewiesen, dass die vorliegende Erfindung nicht auf das vorliegend gezeigte Ausführungsbeispiel beschränkt ist. Beispielsweise sind auch Zaunstreben 7 bzw. Zaunrohre 12 und Stangenverbinder 13 mit einem quadratischen Querschnitt denkbar. Weiter sind auch andere Ausgestaltungen der horizontalen Strebenanordnung 5 sowie der Zaunhalterung 6 denkbar, wie beispielsweise Streben, die eine runde oder eine anderen Querschnittsform aufweisen.

### Bezugszeichen

- 1: Gleisschutzzaunsystem
- 2: Gleisschutzzaunhaltesystem
- 3: Schiene
- 4: Schienenfußhalterung
- 5: Horizontale Strebenanordnung
- 6: Zaunhalterung
- 7: Zaunstrebe
- 8: Aufhängung
- 9: Zaunstange
- 10: Stangenaufnahme
- 11: Klemmstein
- 12: Zaunrohr
- 13: Stangenverbinder
- 14: Federelement
- 15: Begrenzungselement
- 16: Betätigungselement
- 17: Führungsschlitz
- 18: Verbindungsabschnitt
- 19: Eingriffsabschnitt
- 20: Absatz
- 21: Aufnahmeöffnung des Stangenverbinders
- 22: Sicherungselement
- 23: Flügelmutter
- 24: Aufnahmeöffnung des Verbindungsabschnitts
- L: Längsachse

## Patentansprüche

1. Zaunstange (9) für eine aus mehreren solcher Zaunstangen (9) gebildete Zaunstrebe (7) eines Gleisschutzzauns, wobei die Zaunstange (9) ein Zaunrohr (12) umfasst, **gekennzeichnet durch** einen Stangenverbinder (13), der zwischen einer ausgefahrenen Kupplungsstellung zur Verbindung mit einer benachbarten Zaunstange (9) und einer in das Zaunrohr (12) eingefahrenen Lösestellung zum Lösen benachbarter Zaunstangen (9) einer Zaunstrebe (7) verschiebbar an einem ersten Ende des Zaunrohrs (12) angeordnet ist.

2. Zaunstange (9) nach Anspruch 1, **dadurch gekennzeichnet, dass** der Stangenverbinder (13) parallel zu einer Längsachse (L) des Zaunrohrs (12) zwischen der Kupplungsstellung und der Lösestellung verschiebbar ist.

3. Zaunstange (9) nach Anspruch 1 oder 2, **dadurch gekennzeichnet, dass** das Zaunrohr (12) an einem zweiten Ende einen Verbindungsabschnitt (18), insbesondere einen Verbindungsabschnitt (18) mit verringerter oder verbreiterter Abmessung, zur Verbindung mit dem Stangenverbinder (13) einer benachbarten gleichartigen Zaunstange (9) aufweist.

4. Zaunstange (9) nach Anspruch 3, **dadurch gekennzeichnet, dass** der Verbindungsabschnitt (18) zum Einbringen des Stangenverbinders (13) einer benachbarten Zaunstange (9) ausgebildet ist.

5. Zaunstange (9) nach Anspruch 3 oder 4, **dadurch gekennzeichnet, dass** der Stangenverbinder (13) und der Verbindungsabschnitt (18) jeweils zumindest eine Aufnahmeöffnung (21, 24) aufweisen, in die ein Sicherungselement (22) zur Sicherung der Verbindung zweier Zaunstangen (9) einbringbar ist.

6. Zaunstange (9) nach einem der voranstehenden Ansprüche, **dadurch gekennzeichnet, dass** der Stangenverbinder (13) einen Eingriffsabschnitt (19), insbesondere einen Eingriffsabschnitt (19) mit einer gegenüber dem restlichen Stangenverbinder (13) verringerten Abmessung, aufweist.

7. Zaunstange (9) nach einem der voranstehenden Ansprüche, **dadurch gekennzeichnet, dass** der Stangenverbinder (13) in der Kupplungsstellung oder der Lösestellung federnd vorgespannt angeordnet ist.

8. Zaunstange (9) nach Anspruch 7, **gekennzeichnet durch** ein in dem Zaunrohr (12) angeordnetes Begrenzungselement (15), insbesondere einen in das Zaunrohr (12) eingebrachten Begrenzungsstift, und ein zwischen dem Begrenzungselement (15) und dem Stangenverbinder (13) angeordnetes Federelement (14).

9. Zaunstange (9) nach einem der voranstehenden Ansprüche, **dadurch gekennzeichnet, dass** der Stangenverbinder (13) in der Lösestellung vollständig in das Zaunrohr (12) eingebracht ist.

10. Zaunstange (9) nach einem der voranstehenden Ansprüche, **gekennzeichnet durch** ein mit dem Stangenverbinder (13) verbundenes Betätigungselement (16) zur Verschiebung des Stangenverbinders (13) von der Kupplungsstellung in die Lösestellung und/oder von der Lösestellung in die Kupplungsstellung.

11. Zaunstange (9) nach Anspruch 10, **dadurch gekennzeichnet, dass** das Betätigungselement (16) in einem Führungsschlitz (17), insbesondere einem das Verschieben des Stangenverbinders (13) über die Kupplungsstellung und/oder die Lösestellung hinaus begrenzenden Führungsschlitzes (17), des Zaunrohrs (12) geführt ist.

12. Zaunstange (9) nach einem der voranstehenden Ansprüche, **dadurch gekennzeichnet, dass** der Stangenverbinder (13) elektrisch isolierend ist.

13. Zaunstrebe (7) für einen Gleisschutzzaun umfassend mehrere miteinander verbundene Zaunstangen (9) nach einem der voranstehenden Ansprüche.

14. Zaunstrebe (7) nach Anspruch 13, **dadurch gekennzeichnet, dass** zwei miteinander verbundene Zaunstange (9, 9`) durch ein in die Aufnahmeöffnung (21) des Stangenverbinders (13) der ersten Zaunstange (9) und die Aufnahmeöffnung (24`) des Verbindungsabschnitts (18`) der zweiten Zaunstange (9`) einbringbares Sicherungselement (22) sicherbar sind.

15. Gleisschutzzaunsystem (1) umfassend eine Zaunstrebe (7) nach einem der Ansprüche 13 oder 14 sowie ein an einer Schiene (3) anbringbares Gleisschutzzaunhaltesystem (2) mit zumindest einer Zaunhalterung (6), die mindestens eine Aufhängung (8) aufweist, in die die Zaunstrebe (7) einlegbar und, insbesondere unter Klemmung der Zaunstrebe (7), sicherbar ist.
